# EUROPEAN PATENT SPECIFICATION

(11) **EP 3 089 176 B1**
(45) Date of publication and mention of the grant of the patent: **09.05.2018**
(21) Application number: 16380004.8
(22) Date of filing: 04.03.2016
(51) Int. Cl.: H01F 3/10, H01F 3/08, H01F 27/02, H01F 27/26, H01Q 7/08, B60R 25/24, G07C 9/00

(54) **ELONGATED FLEXIBLE INDUCTOR AND ELONGATED FLEXIBLE LOW FREQUENCY ANTENNA**
LANGGESTRECKTER FLEXIBLER INDUKTOR UND LANGGESTRECKTE FLEXIBLE NIEDERFREQUENZANTENNE
INDUCTEUR FLEXIBLE ALLONGÉ ET ANTENNE BASSE FRÉQUENCE FLEXIBLE ALLONGÉE

(43) Date of publication of application: 02.11.2016
(60) Divisional application: 18152939.7
(73) Proprietor: Premo, S.L., 29590 Campanillas (Malaga) (ES)
(72) Inventor: ROJAS CUEVAS, Antonio, 29190 Málaga (ES); NAVARRO PERÉZ, Francisco Ezequiel, 29540 Bobadilla Estación Antequera (Málaga) (ES); CAÑETE CABEZA, Claudio, 29631 Benalmadena (Málaga) (ES)
(74) Representative: Juncosa Miro, Jaime

(56) References cited:
- CN-A- 85 106 221
- GB-A- 2 025 150
- US-A1- 2002 122 011
- US-A1- 2015 123 761
- US-B2- 7 138 896

## Description

### Technical field

The present invention is comprised in the field of keyless door opening or entry systems, of particular application in the automobile sector, in which they are also applied to controlling the electronic immobilizer for starting the engine. This "keyless" system (KES or Keyless Entry System or also referred to as PKE - Passive Keyless Entry) is based on the use of a remote control or device emitting wireless signals and on the arrangement in the vehicle itself of 3 or more antennas the function of which is to detect the presence (capturing the mentioned wireless signals), in a perimeter of about 1.5 m or more surrounding the vehicle, of the mentioned remote control device carried by a user. Based on said detection, the door is opened or locked and options of switching the engine on and off, comfort adjustments of the rearview mirrors, motorized seats, switching the courtesy light on, are also enabled among other possible functions.

The invention provides a keyless entry system with a single antenna.

To this end, the invention proposes the use of flexible elongated inductors which comprise a core formed by two or more rigid ferromagnetic cores or elements, connected in an articulated manner to one another at their ends, forming an oblong assembly capable of bending without risk on the integrity of the inductor, and having a coil made from a conductive element surrounding said composite core.

An elongated and flexible low-frequency antenna is easily obtained from the mentioned flexible inductor by providing electronic elements and eventually connection elements for connecting internally or externally to a capacitor to configure a resonant tank.

### Background

Engineers and technologist have been seeking for a keyless opening system with a single antenna for years. Many systems have been described in theory, but all of them lack the actual possibility of providing an antenna that overcomes the problem of fragile ferrite magnetic cores.

Keyless entry systems for the automotive industry often work at low frequencies, such as for example, at 20 KHz such as those described in MARQUARDT's patent documents EP-B1-1723615 and WO-A1-2013135381, or at 125 KHz and 134 KHz such as those described in CONTI's patent documents WO-A1-2011120501 or US-B2-9184506.

In order to cover a minimum reading distance (capture the wireless signal of the remote control device) from the vehicle, the existing systems usually use short ferrite antennas arranged in the door handles and trunk. These antennas normally use cores made of soft ferrite magnetic material, ZnMn. Since ferrite is a brittle and fragile material, the maximum length of the antennas is limited to a length in which the ferrite can withstand a minimum torque or deformation. This limits the actual length of ferrite cores used to less than 180 mm and typically from 80 to 120 mm. These extremely fragile cores receive a coil which is protected by overmolding or by plastic casings and the antennas made of resulting wire coil are in general embedded in a resin or already overmolded with low pressure or by high pressure polymers.

All these plastic coatings and layers are intended for protecting the fragile ferrite core from external forces, torques, blows and bends.

PREMO's patent application PCT/IB2015/001238 describes flexible magnetic cores and processes for production thereof, based on microwires made from high-permeability soft magnetic alloys and polymer nanoparticles dispersed in a polymer matrix surrounding said microwires.

With continuous ferrite cores, the length of the antennas is limited and the systems of the state of the art describe arrangements with 3 to 5 antennas per vehicle in order to cover a minimum reading distance around the entire vehicle.

Meanwhile, the current antennas used in vehicles generally have a length less than 180 mm, the replacement thereof with a single antenna would require a length between 300 mm and 500 mm in order to generate a magnetic field having sufficient intensity to cover those generated by the current short antennas. However, an antenna so long cannot use a single solid ferrite core because in said case it would break easily with a very small bending force even if it is coated, molded or overmolded by means of a casing or surrounded by a hard plastic casing.

A possibility for solving the mentioned technical problem would be a "keyless" system that uses an elongated, completely flexible, low-frequency LF antenna, such as that provided in PREMO's patent application PCT/IB2015/001238.

This innovation would allow implementing a "KES" system that would provide, with a single antenna, performances equal to or greater than those provided by the systems of the state of the art with 3, 4 or 5 antennas. The innovation leads to a "KES" system having many technical and economical advantages:
- The wiring and connectors are reduced by 1/3, 1/5 or %, respectively.
- OEM assembly time is reduced by 1/3, 1/5 or %, respectively.
- The total energy consumption and actual battery losses, a very important parameter particularly in electric vehicles, are proportionally reduced.
- A longer antenna requires lower currents to generate equal or more intense magnetic fields, thereby reducing the necessary energy and allowing reducing the cross section of the wire in the antennas' coil.

A reduction of the electrical output necessary in the vehicle is achieved with the foregoing; MOSFET transistors which allow reducing the number of amplifiers and the characteristics of the power stage by 1/3, 1/4 or 1/5 and furthermore allow simplifying the final analog power elements necessary which may be simpler and less expensive due to the fact that a lower current is being used for generating the same magnetic fields than the systems of the art. In general, the Front-End or analog interface of the reader in the electronic control unit (ECU) is simplified both by reduction of the channels that would go from 5, 4 or 3 to 1 and by an important reduction of the power of the remaining channel.

The reliability of a vehicle is proportional to the number of components it incorporates so the mere reduction of the number of antennas and channels in the ECU provides intrinsic reliability increasing the mean time between system failures or MTBF.

Likewise, by using a single antenna the safety elements thereof are simplified.

An elongated inductor comprising multiple ferrite cores has been widely used for AM radio systems. Patent application WO-A2-2009123432 describes a solution consisting of multiple cores of cylindrical rods inside a coil. A more recent application in wireless charging systems was presented by Qualcom in patent application US-A1-2013249303 disclosing a plurality of aligned ferromagnetic elements.

SUMIDA's patent application US-A1-20150295315 describes rigid, solid ferrite cores that are introduced in a coil forming machine with a specific shape for arranging capacitors and waveguides.

Said PREMO's patent application PCT/IB2015/001238 describes various materials other than ferrite such as nanocrystalline sheets but they have not been used in practice because said materials have a very significant drawback, the magnetostriction, a property of soft magnetic materials causing great changes in magnetic permeability under pressure or deformation. Therefore, while these sheet materials, although being very expensive, could theoretically be used in long antennas, in practice these antennas do not break, but change their permeability so much that the resonance frequency typical of the tuned tanks that they form in series or capacitors in parallel lack the minimum selectiveness required for a reliable system. On the other hand, the deformation of the sheets is only possible in the axis perpendicular to the wide side, while in the other two orthogonal axes the cores are non-deformable.

PREMO's patent application PCT/IB2015/001238 of PREMO provides an elongated antenna that can be bent in a three-dimensional space both along an X-axis and along an orthogonal Y-axis.

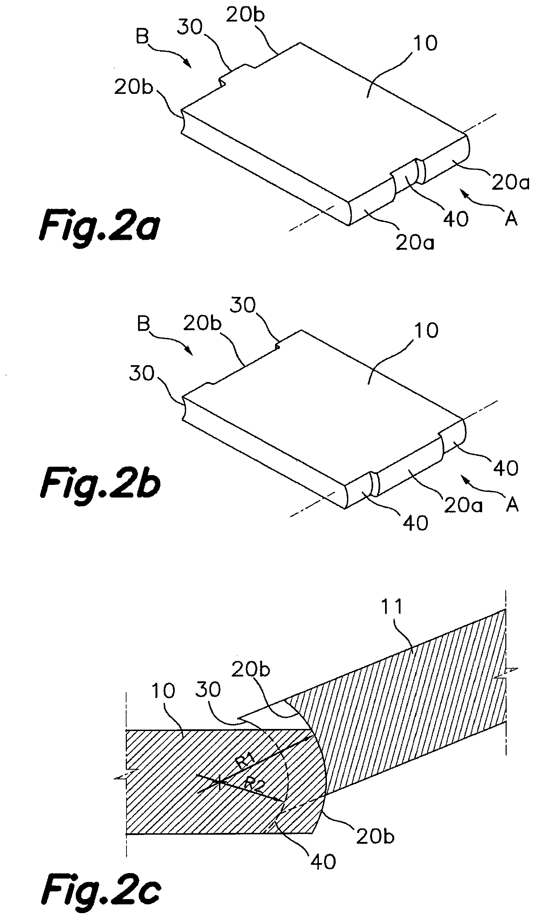

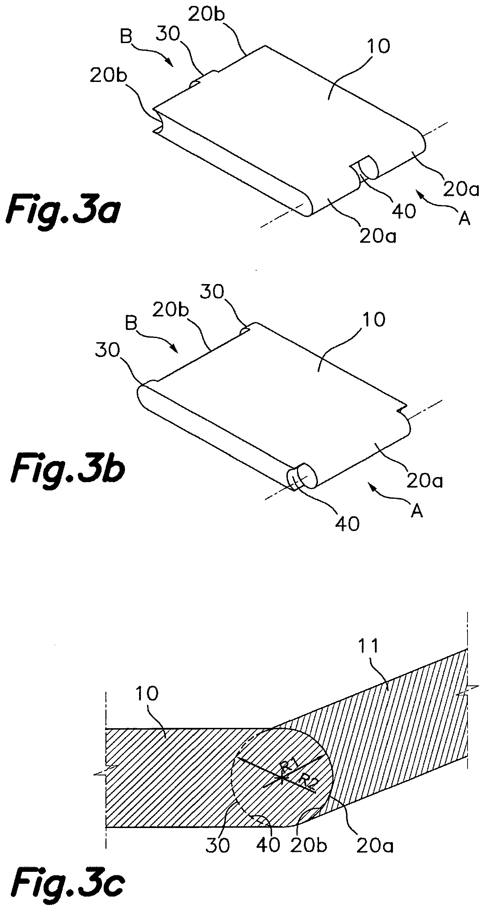

Another solution is described in SUMIDA's patent application US-A1-2015123761 based on a composite core made of a plurality of cylindrical ferrite cores (see Figure 2) with a spherical concave or convex termination at the head and tail ends thereof, which are coupled to one another, and also discloses cores coupled to another in a book-like configuration (see Figure 3).

The construction of elongated cores by means of adding longitudinally smaller elements coupled to one another is already disclosed in patent document US-A1-2015123761.

Other documents disclosing composite inductors include patent documents US-B1-6417665 describing a long magnetometer with a flexible magnetic core, made up of several cores coupled to one another and EP-A2-0848577 describing the construction of a long and flexible magnetic core made of ferrite rods coupled at their ends. Furthermore, coupling at the ends of magnetic cores by means of physical interstices or separations between the spherical or cylindrical contacting surfaces (gap) is a common practice in magnetic rotating machines because they are required for assuring a constant and minimum gap, as well as for free movement. See, for example, the 1974 publication by Bruce De Palma "The generation of a unidirectional Force" (http//depalma.pair.com/GenerationOfUnidirectionalForce.html).

In hard magnetic materials, it is also common practice for moving magnetic parts to use spherical interstices (gaps) in combination with ferrofluids for advanced bearings.

Patent document US7138896 describes ferrite cores made of individual elements coupled to one another in a head-tail-head manner by means of a cylindrical gap for EMI (electromagnetic interference) shielding in flat cables operating as an antenna radiating energy in the form of electromagnetic radiation. A flexible elongated inductor according to the preamble of present claim 1 is disclosed in any of US 2015/0123761 A1, US 7,138,896 B2 and GB 2 025 150 A.

The present invention prevents problems in the physical implementation of inductors with a plurality of magnetic cores coupled to one another and affecting their performance when they are applied for constructing an LF antenna for a KES system, as a result of the parasitic vertical and horizontal gaps, in particular:
- The discrete cylindrical elements or spherical core elements do not have an adhesive attachment at their contacting articulation ends, and there is no way to assure that the gap, which is demarcated by the distance of air or non-ferromagnetic material between core elements, does not become larger when an elongation occurs in direction X. Therefore, when an elongation occurs in direction X, the distance between the elements increases so the loss of magnetic flux increases, resulting in an increase in magnetic reluctance as a result of a lower permeability, causing a deviation of the resonance frequency and antenna malfunction.
- The discrete elements of the core that is cylindrical or having a rectangular cross section can slide with respect to one another, without any retention element between them, thereby causing a horizontal separation generating a misalignment of the magnetic cores coupled to one another increasing the total reluctance in the manner proportional to the number of elements. This horizontal separation or interstice reduces the constant cross section area available intersected by the lines of magnetic field, thereby resulting in a reduction of the effective permeability. On the other hand, the magnetic leakage flux lost in the gap is not redirected by a low reluctance magnetic path, losing the induction capacity in the coil.

Both effects, i.e., misalignment in the direction of the Y-axis and the enlargement of the gap in the direction of the X-axis of a three-dimensional space determine an inefficient performance of the mentioned composite inductors.

The present invention proposes a solution to the mentioned problems and allows constructing a flexible antenna having a length greater than 300 mm.

### Brief Description of the Invention

The invention provides a flexible elongated inductor according to present claim 1, comprising a coil made from a conductive element (metal wire or conductive foil) arranged around a core formed by two or more rigid magnetic elements or magnetic cores, made from ferromagnetic material, connected in an articulated manner to one another at their ends, forming an oblong assembly such as that described, for example, in patent document US7138896, wherein each of the magnetic cores comprises:
- a head end A provided with a circular convex curved surface in relation to a transverse axis of the head;
- a tail end B provided with a circular concave curved configuration in relation to a transverse axis of the tail, parallel to the transverse axis of the head, and being said circular concave curved configuration complementary to said circular convex curved configuration.

The magnetic cores are coupled such that the head end A of one of the magnetic cores is coupled, through contact surfaces, to the tail end B of an adjacent one of the magnetic cores, forming an articulated attachment around the mentioned transverse axes, wherein the mentioned transverse axes of the head and tail of the two magnetic cores are coupled to one another coinciding in the coupling area, providing a joint having a variable, adjustable angle, like links of a flat chain.

According to this invention, the mentioned assembly of said two or more rigid magnetic cores is surrounded by a flexible polymer casing, including magnetic charges that work together to prevent magnetic flux dispersion in the coupling areas or interstices (gaps) between said magnetic cores, the mentioned flexible polymer casing including microfibers, microparticles and/or nanoparticles of a soft ferromagnetic material present alone or in any combination thereof inside the polymer matrix of said polymer casing, providing said magnetic charges. The present invention describes a keyless opening system for automobiles based on a single, elongated and flexible or semi-flexible LF antenna (primarily from 20 KHz to 300 Khz).

In one embodiment, the mentioned microfibers, microparticles and/or nanoparticles of a soft ferromagnetic material represent about at least 50% of the total weight of the polymer casing.

Furthermore, the mentioned articulated attachment includes at least one transverse retention configuration formed by a projection and a recess complementary to one another, defined in said head end A and tail end B, respectively, and formed from said ferromagnetic material of the mentioned magnetic cores, preventing said retention configuration from being misaligned in a transverse direction of the magnetic cores coupled to one another.

According to a preferred embodiment of the invention, each of the magnetic cores connected in an articulated manner has a rectangular cross section and more specifically a rectangular prismatic configuration, said retention projection and recess being defined on respective opposing, smaller rectangular faces of both ends A and B of the magnetic core.

By means of such coupling arrangement between the magnetic cores, a flexible elongated inductor having a length greater than 15 cm and preferably greater than 30 cm and with a maximum length of 60 cm (sufficient length for the applications of a KES system, as described, although greater inductor lengths would be perfectly attainable, operating perfectly and with minimum magnetic flux losses.

The invention also proposes an elongated flexible antenna formed by a flexible inductor according to present claim 12. Preferably, the winding made from a conductive element is formed by a conductive wire or a conductive foil.

Other preferred features of the invention are described in the following detailed description of an embodiment.

### Brief Description of the Drawings

The foregoing and other advantages and features will be better understood based on the following detailed description of an embodiment in reference to the attached drawings which must be interpreted in an illustrative and non-limiting manner, in which:
Figure 1 a shows a first embodiment of a magnetic core of a flexible elongated inductor according to the invention and Figure 2a shows a second embodiment that differ in the arrangement of the retention recess or projection and of the corresponding contact coupling surfaces for linking with other inductors to form a flexible elongated inductor, as described above.
Figure 1c shows detailed section view of the coupling between the cores corresponding to the embodiment of Figure 1 a.
Figures 2a and 2b show two embodiments for a magnetic core of a flexible elongated inductor to the invention which are equivalent to those illustrated in Figures 1 a and 1b, although the arrangement of the projection and recess is the other way round.
Figure 2c shows the section view of the coupling between two magnetic cores according to Figure 2b.
Figures 3a and 3b show two other possible embodiments of magnetic cores having the features of the invention. Figure 3c is a section view of a coupling between the cores having a configuration according to Figure 3b.

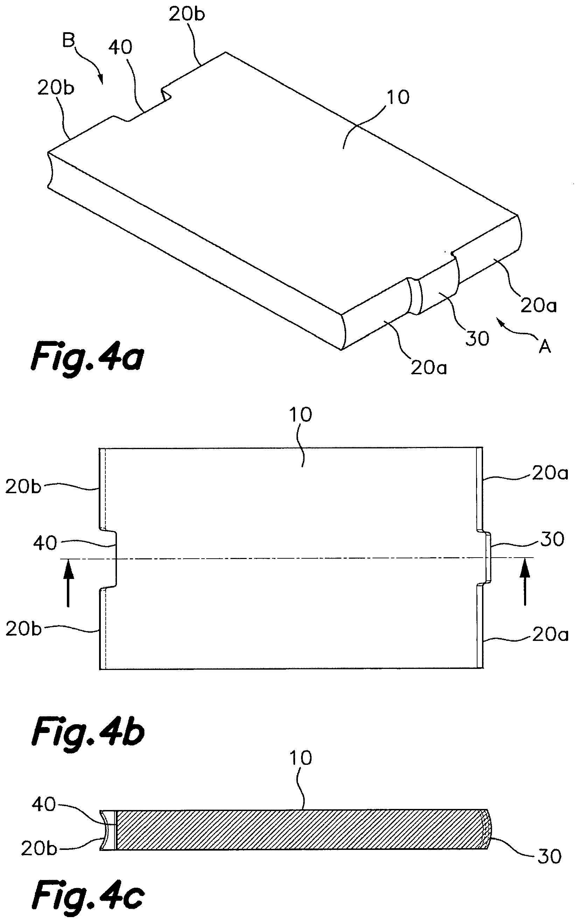

Figures 4a and 4b show another embodiment of magnetic core according to the principles of the invention and Figure 4c illustrates the element sectioned through the plane of section illustrated in Figure 4b.

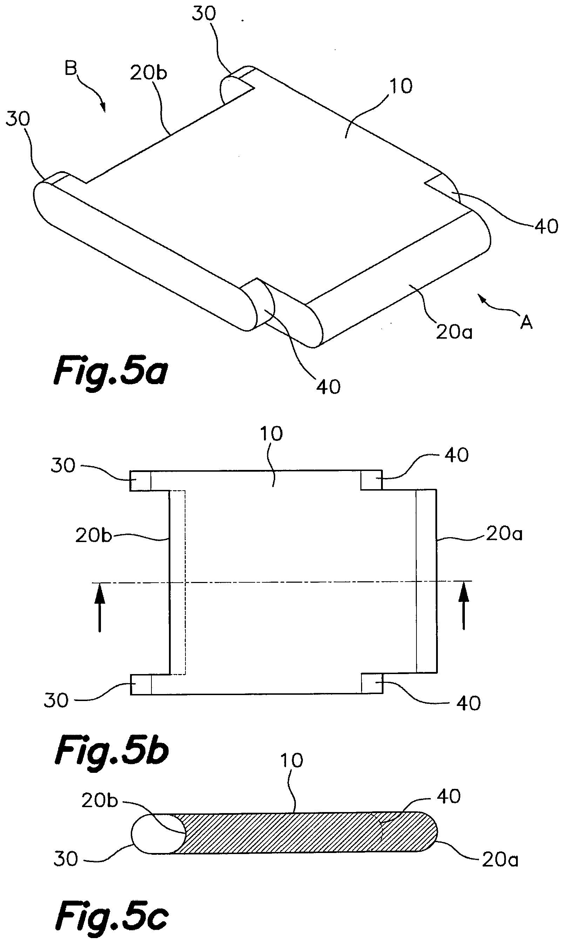

Figures 5a and 5b are yet other embodiments of magnetic cores of a flexible elongated inductor according to the invention, Figure 5c illustrating a cross section of the said magnetic core according to the plane of section indicated in Figure 5b.
Figures 6a and 6b show an embodiment of a flexible elongated magnetic inductor according to the present invention formed by the coupling of seven magnetic cores, the assembly being surrounded by a flexible polymer casing, including magnetic charges that work together to prevent magnetic flux dispersion in the coupling areas or interstices (gaps) between said magnetic cores. An elongated flexible antenna will be obtained from the flexible inductor of said Figures 6a and 6b, a conductive wire or a conductive sheet suitably coiled around the body thereof.
Figure 7 shows a perspective view of a possible embodiment of such LF antenna.

### Detailed Description of Several Embodiments

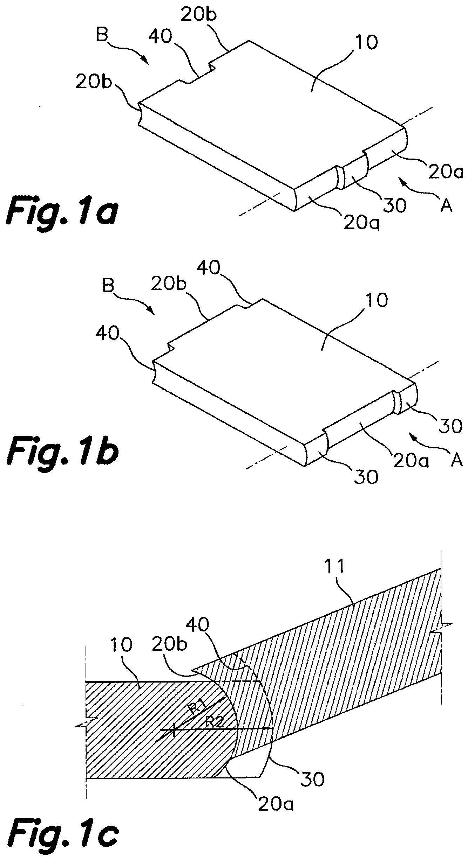

As shown in the different embodiments of Figures 1 a to 5c, the invention relates to a flexible elongated inductor formed by a plurality of rigid magnetic cores 10, 11, made from ferromagnetic material, connected in an articulated manner to one another at their ends, forming an oblong assembly, already known in the state of the art, as referred to therein and wherein each of the magnetic cores 10, 11 comprises:
- a head end A provided with a circular convex curved surface in relation to a transverse axis of the head; and
- a tail end B provided with a circular concave curved configuration, in relation to a transverse axis of the tail, parallel to the transverse axis of the head, and being said circular concave curved configuration complementary to said circular convex curved configuration.

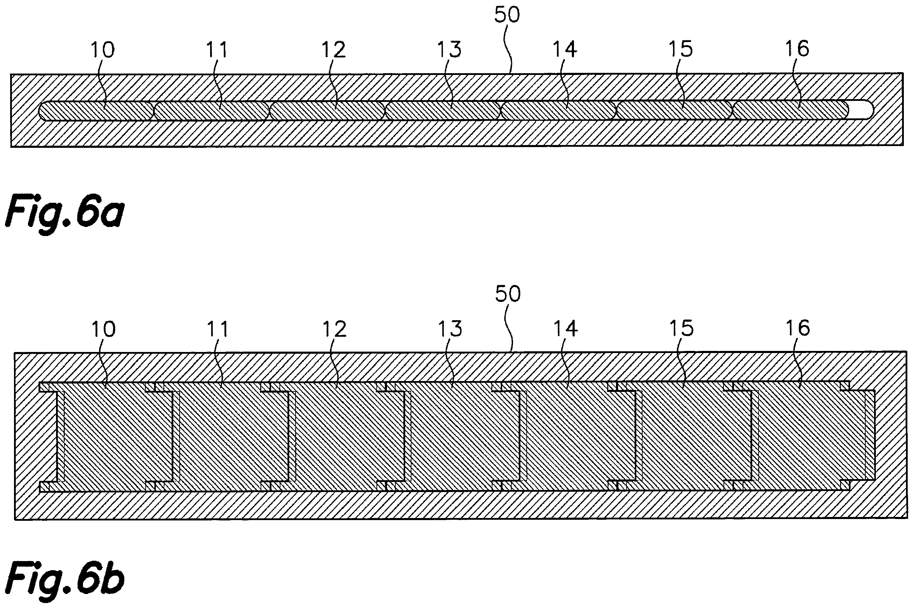

Said articulated connection or coupling between the magnetic cores is performed such that the head end A of a magnetic core is coupled, through contact surfaces 20a, 20b, to the tail end B of an adjacent magnetic core, forming an articulated attachment around the mentioned transverse axes, wherein the transverse axes of the head and tail of the two magnetic cores coupled to one another 10, 11 coinciding in the coupling area (see, in particular, drawings in section view) providing a joint having a variable, adjustable angle. As clearly illustrated in Figures 6a and 6b, the invention is characterized in that the assembly of said rigid magnetic cores 11, 12, 13, 14, 15, 16 (six in this embodiment) is surrounded by a flexible polymer casing 50 including magnetic charges that work together to prevent magnetic flux dispersion in the coupling areas or interstices (gaps) between said plurality of magnetic cores 10, 11 coupled to one another, wherein the mentioned flexible polymer casing includes microfibers, microparticles and/or nanoparticles of a soft ferromagnetic material present alone or in any combination thereof inside the polymer matrix of said polymer casing. Likewise, the mentioned microfibers, microparticles and/or nanoparticles of a soft ferromagnetic material can represent at least 50% of the total weight of the core. Such casing assures that there are no magnetic flux losses in the joint areas or contact surfaces 20a, 20b of the magnetic cores.

The mentioned drawings illustrate preferred embodiments wherein each of the magnetic cores 10, 11, 12, 13, 14, 15, 16 coupled to one another or connected in an articulated manner has a rectangular cross section, such that they form a flat, flexible elongated inductor.

A second relevant feature of the invention lies in the fact that said articulated attachment of the magnetic cores 10, 11 includes at least one transverse retention configuration formed by a projection 30 and a recess 40 complementary to one another, defined in said head end A and tail end B, respectively, and formed from said ferromagnetic material of the mentioned magnetic cores, preventing said retention configuration from being misaligned in a transverse direction of the magnetic cores 10, 11 coupled to one another.

The features relating to the explained setting-up and arrangement of the coupling between the magnetic cores allow obtaining a flexible elongated inductor with a length greater than 15 cm and preferably greater than 30 cm.

To use the flexible elongated inductor as an antenna (with a coil around its elongated section), it is considered that a maximum length of 60 cm is sufficient, although the principles of the invention must not be understood as being limited to said maximum value, considered as sufficient for the desired functionality and performances in the automobile field.

The proposed magnetic core has a rectangular prismatic configuration, said projection 30 and recess 40 being defined on respective opposing, smaller rectangular faces of both ends A and B of the magnetic core 10, 11. In the different embodiments, the differences lies in where said projection 30 and recess 40 and the corresponding contact surfaces 20a and 20b between the different magnetic cores have been configured.

Particularly, solutions have been shown wherein the projection 30 and the projection 40, in retention and anti-sliding functions, adopt a central position in relation to the assembly of rigid magnetic cores 10, 11 coupled to one another at their ends A and B, whereas in other examples said projection 30 and said projection 40 adopt a side position in relation to the assembly of rigid magnetic cores 10, 11 coupled to one another at their ends A and B.

In embodiments suitable for the described functionality, it has been envisaged that said projection 30 and said projection 40 have a span with a width of 10% in relation to the largest width of the rectangular prismatic body, or a width of a 60% in relation to the largest width of the rectangular prismatic body.

In the embodiment of Figures 6a and 6b, the inductor includes seven magnetic cores coupled to one another and a total extension determining that, when held by one end, the free end will bend a maximum of 2 cm for a length of 30 cm.

As indicated, a flexible LF antenna will be obtained by means of a suitable coil of a conductive metal wire 51 (or alternatively of a conductive foil) arranged around an elongated flexible inductor such as those described.

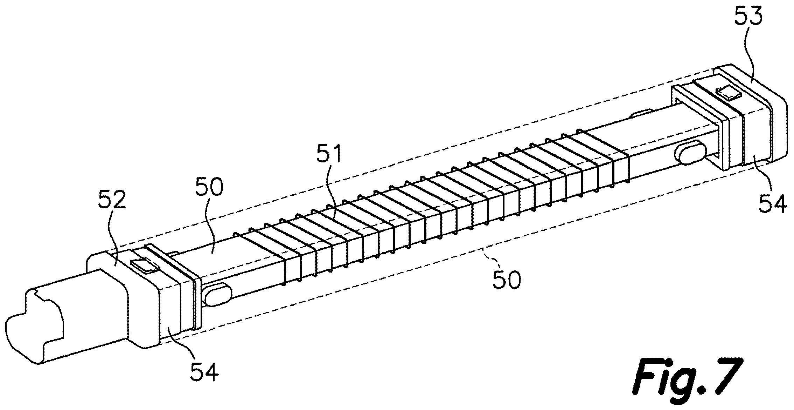

Figure 7 depicts a possible embodiment of an LF antenna using the proposed flexible inductor in which there can be seen the polymer casing 50 and the coil 51 forming the mentioned flexible inductor, boxes made, for example, of a PBT thermoplastic polymer, front part 52 integrating a connector and terminals and rear part 53 and closure gaskets 54, said boxes 52, 53 being attached through a tube 55 likewise made of a PBT plastic, providing a suitable flexibility.

## Claims

1. A flexible elongated inductor, comprises a core and a winding made from a conductive element arranged around the core formed by at least two rigid magnetic cores (10), (11) made from ferromagnetic material, connected in an articulated manner to one another at their ends, forming an oblong assembly, wherein each of the magnetic cores (10), (11) comprises:
- a head end A, provided with a circular convex curved surface in relation to a transverse axis of the head; and
- a tail end B, provided with a circular concave curved configuration in relation to a transverse axis of the tail, parallel to the transverse axis of the head, and being said circular concave curved configuration complementary to said circular convex curved configuration,
wherein the head end A of one of the magnetic cores is coupled through contact surfaces (20a, 20b) with the tail end B of an adjacent one of the magnetic cores, forming an articulated attachment around said transverse axes, wherein said transverse axes of the head and tail of the two magnetic cores (10), (11) being coupled to one another coinciding in the coupling area, providing a joint having a variable, adjustable angle, wherein the assembly of said two or more rigid magnetic cores is surrounded by a flexible polymer casing (50),
**characterised in that** the flexible polymer casing includes magnetic charges that work together to prevent magnetic flux dispersion in the coupling areas or interstices between said at least two magnetic cores (10, 11), said flexible polymer casing (50) including microfibers, microparticles and/or nanoparticles of a soft ferromagnetic material present alone or in any combination thereof inside the polymer matrix of said polymer casing, providing said magnetic charges.

2. The flexible elongated inductor according to claim 1, wherein each of the magnetic cores (10, 11) connected in an articulated manner has a rectangular cross section.

3. The flexible elongated inductor according to any one of the preceding claims, wherein said articulated attachment includes at least one transverse retention configuration formed by a projection (30) and a recess (40) complementary to one another, defined in said head end A and tail end B, respectively, and formed from said ferromagnetic material of the mentioned magnetic cores, preventing said retention configuration from being misaligned in a transverse direction of the magnetic cores (10, 11) coupled to one another.

4. The flexible elongated inductor according to claim 1 or 3, having a length greater than 15 cm and preferably greater than 30 cm.

5. The flexible elongated inductor according to claim 4, **characterized in that** it has a maximum length of 60 cm.

6. The flexible elongated inductor according to claim 1, wherein said microfibers, microparticles and/or nanoparticles of a soft ferromagnetic material represent at least 50% of the total weight of the core.

7. The flexible elongated inductor according to claim 3 or any of claims 4, 5 when dependent on claim 3, wherein said magnetic core has a rectangular prismatic configuration, said projection (30) and recess (40) being defined on respective opposing, smaller rectangular faces of both ends A and B of the magnetic core (10, 11).

8. The flexible elongated inductor according to claim 7, wherein said projection (30) and said recess (40) adopt a central position in relation to the assembly of the rigid magnetic cores (10, 11) coupled to one another at their ends A and B.

9. The flexible elongated inductor according to claim 7, wherein said projection (30) and said recess (40) adopt a side position in relation to the assembly of the rigid magnetic cores (10, 11) coupled to one another at their ends A and B.

10. The flexible elongated inductor according to claim 7, wherein said projection (30) and said recess (40) have a width of 10% in relation to the largest width of the rectangular prismatic body, or have a width of 60% in relation to the largest width of the rectangular prismatic body.

11. The flexible elongated inductor according to any one of the preceding claims, wherein the inductor has at least 5 magnetic cores coupled to one another and a total extension providing a sag of 2 cm for a length of 30 cm.

12. An elongated flexible antenna formed by a flexible inductor according to any one of claims 1 to 6.

13. The elongated flexible antenna according to claim 12, wherein the winding made from a conductive element is formed by a conductive wire or a conductive foil.

14. The elongated flexible antenna according to claim 12 or 13, wherein said antenna is an LF antenna operating in a range of frequencies of 20 KHz to 300 Khz.

## Patentansprüche

1. Langgestreckter flexibler Induktor, welcher einen Kern und eine Wicklung hergestellt aus einem leitfähiges Element umfasst, angeordnet um den Kern herum, welcher aus mindestens zwei starren Magnetkernen (10), (11) hergestellt aus ferromagnetischem Material gebildet ist, welche gelenkig miteinander an deren Enden verbunden sind, unter Bildung einer länglichen Baugruppe, wobei jeder der Magnetkerne (10), (11) Folgendes umfasst:
- ein Kopfende A, versehen mit einer kreisförmigen konvex gekrümmten Oberfläche in Bezug auf eine Querachse des Kopfes; und
- ein Schwanzende B, versehen mit einer kreisförmige konkav gekrümmten Ausgestaltung in Bezug auf eine Querachse des Schwanzes, parallel zur Querachse des Kopfes, und wobei die genannte kreisförmige konkav gekrümmte Ausgestaltung komplementär zur genannten kreisförmigen konvex gekrümmten Ausgestaltung ist,
wobei das Kopfende A eines der Magnetkerne über Kontaktflächen (20a, 20b) mit dem Schwanzende B eines benachbarten Magnetkerns der Magnetkerne gekoppelt ist, unter Bildung einer gelenkigen Verbindung um die Querachsen herum,
wobei die genannten Querachsen des Kopfes und des Schwanzes von zwei Magnetkernen (10), (11) mit Übereinstimmung im Kopplungsbereich miteinander gekoppelt sind, unter Bereitstellung eines Gelenks mit einem variablen, einstellbaren Winkel,
wobei die Baugruppe aus den genannten zwei oder mehr starren Magnetkernen von einem flexiblen Polymergehäuse (50) umgeben ist,
**dadurch gekennzeichnet, dass** das flexible Polymergehäuse magnetische Ladungen beinhaltet, welche zusammenwirken, um Magnetflussstreuung in den Kopplungsbereichen oder Spalten zwischen den genannten mindestens zwei Magnetkernen (10, 11) zu verhindern, wobei das genannte flexible Polymergehäuse (50) Mikrofasern, Mikropartikeln und/oder Nanopartikeln eines weichen ferromagnetischen Materials beinhaltet, welche allein oder in jeder Kombination derselben innerhalb der Polymermatrix des genannten Polymergehäuse vorhanden sind, unter Bereitstellung der genannten magnetischen Ladungen.

2. Langgestreckter flexibler Induktor nach Anspruch 1, wobei jeder der gelenkig verbundenen Magnetkerne (10, 11) einen rechteckigen Querschnitt aufweist.

3. Langgestreckter flexibler Induktor nach einem der vorhergehenden Ansprüche, wobei die genannte gelenkige Verbindung mindestens eine querlaufende Rückhaltungsausgestaltung beinhaltet, gebildet aus einem Vorsprung (30) und einer Aussparung (40), die zueinander komplementär sind, jeweils in dem genannten Kopfende A und dem genannten Schwanzende B definiert, und aus dem genannten ferromagnetischen Material der erwähnten Magnetkerne gebildet, wobei verhindert wird, dass die genannte Rückhaltungsausgestaltung in einer Querrichtung der miteinander gekoppelten Magnetkerne (10, 11) falsch ausgerichtet wird.

4. Langgestreckter flexibler Induktor nach Anspruch 1 oder 3, welcher eine Länge größer als 15 cm und vorzugsweise größer als 30 cm aufweist.

5. Langgestreckter flexibler Induktor nach Anspruch 4, **dadurch gekennzeichnet, dass** er eine maximale Länge von 60 cm aufweist.

6. Langgestreckter flexibler Induktor nach Anspruch 1, wobei die genannten Mikrofasern, Mikropartikeln und/oder Nanopartikeln eines weichen ferromagnetischen Materials mindestens 50% des Gesamtgewichtes des Kerns darstellen.

7. Langgestreckter flexibler Induktor nach Anspruch 3 oder einem der Ansprüche 4, 5 wenn sie von Anspruch 3 abhängen,
wobei der genannte Magnetkern eine rechteckige prismatische Ausgestaltung aufweist, wobei der genannte Vorsprung (30) und die genannte Aussparung (40) auf jeweiligen gegenüberstehenden, kleinen rechteckigen Flächen von beiden Enden A und B des Magnetkerns (10; 11) definiert sind.

8. Langgestreckter flexibler Induktor nach Anspruch 7, wobei der genannte Vorsprung (30) und die genannte Aussparung (40) eine mittige Stellung in Bezug auf die Baugruppe aus den starren Magnetkernen (10, 11), welche an deren Enden A und B miteinander gekoppelt sind, annehmen.

9. Langgestreckter flexibler Induktor nach Anspruch 7, wobei der genannte Vorsprung (30) und die genannte Aussparung (40) eine seitliche Stellung in Bezug auf die Baugruppe aus den starren Magnetkernen (10, 11), welche an deren Enden A und B miteinander gekoppelt sind, annehmen.

10. Langgestreckter flexibler Induktor nach Anspruch 7,
wobei der genannte Vorsprung (30) und die genannte Aussparung (40) eine Breite von 10% in Bezug auf die größte Breite des rechteckigen prismatischen Körpers aufweisen, oder eine Breite von 60% in Bezug auf die größte Breite des rechteckigen prismatischen Körpers aufweisen.

11. Langgestreckter flexibler Induktor nach einem der vorhergehenden Ansprüche, wobei der Induktor mindestens 5 miteinander gekoppelte Magnetkerne und eine Gesamterstreckung aufweist, welche eine Durchbiegung von 2 cm für eine Länge von 30 cm bereitstellt.

12. Langgestreckte flexible Antenne, welche aus einem flexiblen Induktor nach einem der Ansprüche 1 bis 6 gebildet ist.

13. Langgestreckte flexible Antenne nach Anspruch 12, wobei die aus einem leitfähigen Element hergestellte Wicklung aus einem leitfähigen Draht oder einer leitfähigen Folie gebildet ist.

14. Langgestreckte flexible Antenne nach Anspruch 12 oder 13, wobei die genannte Antenne eine NF-Antenne ist, welche im Frequenzbereich von 20 KHz bis 300 KHz funktioniert.

## Revendications

1. Un inducteur allongé flexible, qui comporte un noyau et un bobinage fait à partir d'un élément conducteur aménagé autour du noyau formé par au moins deux noyaux magnétiques rigides (10), (11) faits en matériau ferromagnétique, relié de façon articulée l'un l'autre à leurs extrémités, formant un ensemble oblong où chacun des noyaux magnétiques (10) (11) comporte :
- une extrémité avant A, pourvue d'une surface courbe convexe circulaire par rapport à un axe transversal de l'avant ; et
- une extrémité arrière B, pourvue d'une configuration courbe concave circulaire par rapport à un axe transversal de l'arrière, parallèle à l'axe transversal de l'avant et cette configuration courbe concave circulaire étant complémentaire de cette configuration courbe convexe circulaire,
où l'extrémité avant A d'un des noyaux magnétiques est couplée à travers des surfaces de contact (20a, 20b) à l'extrémité arrière B d'un des noyaux magnétiques adjacents, formant une fixation articulée autour de ces axes transversaux,
où ces axes transversaux de l'avant et l'arrière des deux noyaux magnétiques (10), (11) sont couplés l'un l'autre coïncidant dans la région de couplage, offrant un joint ayant un angle réglable variable,
où l'ensemble de ces deux ou plusieurs noyaux magnétiques rigides est entouré d'un boîtier en polymère flexible (50) **caractérisé en ce que** le boîtier de polymère flexible comprend des charges magnétiques qui travaillent ensemble pour éviter la dispersion du flux magnétique dans les régions de couplage ou les interstices entre ces au moins deux noyaux magnétiques (10,11), ce boîtier en polymère flexible (50) comprenant des microfibres, microparticules et/ou nanoparticules d'un matériau ferromagnétique mou présent soit seul soit dans toute combinaison de celui-ci à l'intérieur de la matrice polymère de ce boîtier en polymère offrant ces charges magnétiques.

2. L'inducteur allongé flexible conformément à la revendication 1, dans lequel chacun des noyaux magnétiques (10,11) reliés de façon articulée possède une section en coupe rectangulaire.

3. L'inducteur allongé flexible conformément à une quelconque des revendications précédentes, où cette fixation articulée comprend au moins une configuration de rétention transversale formée par une saillie (30) et une cavité (40) complémentaires l'une de l'autre, définie dans cette extrémité avant A et extrémité arrière B , respectivement et formée à partir de ce matériau ferromagnétique de ces noyaux magnétiques, cette configuration de rétention évitant un mauvais alignement en sens transversal des noyaux magnétiques (10, 11) couplés les uns aux autres.

4. L'inducteur allongé flexible conformément à la revendication 1 ou 3 ayant une longueur de plus de 15 cm et de préférence de plus de 30 cm.

5. L'inducteur allongé flexible conformément à la revendication 4, **caractérisée en ce qu'**il a une longueur maximale de 60 cm.

6. L'inducteur allongé flexible conformément à la revendication 1, où ces microfibres, microparticules et/ou nanoparticules d'un matériau ferromagnétique mou représentent au moins 50% du poids total du noyau.

7. L'inducteur allongé flexible conformément à la revendication 3 ou à une quelconque des revendications 4, 5 lorsqu'elles dépendent de la revendication 3 où ce noyau magnétique possède une configuration prismatique rectangulaire, cette saillie (30) et cavité (40) étant définies sur des faces plus petites opposées respectives rectangulaires des deux extrémités A et B du noyau magnétique (10,11).

8. L'inducteur allongé flexible conformément à la revendication 7, où cette saillie (30) et cette cavité (40) adoptent une position centrale par rapport à l'ensemble de noyaux magnétiques rigides (10,11) couplés l'un l'autre à leurs extrémités A et B.

9. L'inducteur allongé flexible conformément à la revendication 7, où cette saillie (30) et cette cavité (40) adoptent une position latérale par rapport à l'ensemble des noyaux magnétiques rigides (10,11) couplés l'un l'autre à leurs extrémités A et B.

10. L'inducteur allongé flexible conformément à la revendication 7, où cette saillie (30) et cette cavité (40) ont une largeur de 10% par rapport à la plus grande largeur du corps prismatique rectangulaire ou ont une largeur de 60% par rapport à la plus grande largeur du corps prismatique rectangulaire.

11. L'inducteur allongé flexible conformément à une quelconque des revendications précédentes, où l'inducteur possède au moins 5 noyaux magnétiques couplés les uns aux autres et une extension totale offrant un fléchissement de 2 cm pour une longueur de 30 cm.

12. Une antenne allongée flexible formée par un inducteur flexible conformément à une quelconque des revendications 1 à 6.

13. L'antenne flexible allongée conformément à la revendication 12, où le bobinage fait à partir d'un élément conducteur est formé par un fil conducteur ou une feuille de métal conductrice.

14. L'antenne allongée flexible conformément à la revendication 12 ou 13, où cette antenne est une antenne LF fonctionnant dans une gamme de fréquences de 20 KHz à 300 Khz.
